# EUROPEAN PATENT APPLICATION

(11) **EP 4 763 539 A1**
(43) Date of publication of application: **24.06.2026**
(21) Application number: 24221730.5
(22) Date of filing: 19.12.2024
(51) Int. Cl.: B60C 19/00, C08L 23/22

(54) **AN ADHESIVE COMPOSITION FOR A SURFACE OF A PNEUMATIC TYRE AND USE THEREOF, A TYRE COMPRISING THE ADHESIVE COMPOSITION AND A METHOD OF APPLYING THE ADHESIVE COMPOSITION**

(71) Applicant: Bridgestone Europe NV/SA, 1930 Zaventem (BE)
(72) Inventor: STRAFFI, Paolo, 00128 Roma (IT); PONTONE, Roberto, 00128 Roma (IT); CIARNELLA, Alessio, 00128 Roma (IT); BERNAL ORTEGA, Maria Del Mar, 00128 Roma (IT); ARENDS, Robin Frank, 00128 Roma (IT)
(74) Representative: Marchetti, Alessio

(57) **Abstract**

An adhesive composition for a surface of a pneumatic tyre and use thereof, tyre comprising the adhesive composition and a method of applying the adhesive composition.

## Description

### FIELD OF THE INVENTION

The present invention is relates to adhesive compositions for adhering components to surfaces of pneumatic tyres. Specifically, the invention relates to improved adhesive compositions for adhering sound-absorbing material to a surface of the inner cavity of a pneumatic tyre. Accordingly the present invention is directed to an adhesive composition for a surface of a pneumatic tyre and use thereof, a tyre comprising the adhesive composition and a method of applying the adhesive composition.

### BACKGROUND TO THE INVENTION

Pneumatic tyres comprises a toroidal carcass, which has two annular beads and an annular tread. Between the casing and the tread, a tread belt is interposed, which comprises a number of tread plies. Within a carcass ply, an inner liner is arranged which is airtight, constitutes an inner lining and has the function of retaining the air within the pneumatic tyre in order to maintain the inflation pressure of the pneumatic tyre itself over time.

In recent years pneumatic tyres have been provided with an inner lining made of a sound-absorbing material for reducing the noise generated by a pneumatic tyre rolling on a road surface. The sound-absorbing material is typically applied to an already vulcanized pneumatic tyre and preferably to the inner liner. In particular, the sound-absorbing material is applied to the tread and, at least partially, to the side walls.

Known adhesives for adhering sound-absorbing materials to an inner surface of a pneumatic tyre include cyanoacrylate adhesives and pressure sensitive adhesives. These adhesives may be applied to the surface of the pneumatic tyre or pre-coated on the sound-absorbing material. These adhesives have a number of disadvantages, including a limited application temperature range, poor moisture resistance, a limited shelf life, and rapid curing on exposure to air thus limiting the time period for which they are usable. In addition, a perfect fit between the sound-absorbing material and the surface may be required, which is particularly challenging for sponge sound-absorbing materials which have an uneven surface.

The present invention provides improved adhesive compositions for adhering components, preferably sound-absorbing materials, to surfaces of pneumatic tyres. These adhesive compositions overcome one or more of the problems identified above.

### SUMMARY OF THE INVENTION

Viewed from a first aspect, the present invention is directed to an adhesive composition for a surface of a pneumatic tyre, comprising:
an elastomer selected from the group consisting of an isobutylene isoprene rubber (IIR), a chlorinated isobutylene isoprene rubber (CIIR), a brominated isobutylene isoprene rubber (BIIR), an ethylene-propylene rubber (EPR), a styrene-butadiene rubber (SBR), a natural rubber, and combinations thereof, wherein the elastomer is present in an amount of 10% to 30% by weight of the adhesive composition;
a plasticizer, in an amount of from 30% to 90% by weight of the adhesive composition;
optionally a filler selected from the group consisting of carbon black, graphite, graphene, carbon nanotubes, silica, aluminosilicates, starch, magnesium oxide, calcium carbonate, titanium dioxide and combinations thereof;
a tackifier in an amount of from 1 % to 30% by weight of the adhesive composition; and,
a vulcanising agent in an amount of from 0.1% to 3% by weight of the adhesive composition.

Viewed from a second aspect, the present invention is directed to a use of the adhesive composition defined hereinabove on a surface of a pneumatic tyre, preferably a surface of an inner cavity of a pneumatic tyre.

Viewed from a third aspect, the present invention is directed to a method for adhering a component, preferably a sound-absorbing material, to a surface of an inner cavity of a pneumatic tyre comprising:
(a) mounting a pneumatic tyre on a device for rotating a pneumatic tyre comprising tyre rotation rollers;
(b) positioning an adhesive applicator, comprising a hopper containing the adhesive composition as defined hereinabove and a nozzle in fluid communication with the hopper, above a surface of an inner cavity of the pneumatic tyre;
(c) rotating the pneumatic tyre using the tyre rotation rollers;
(d) applying the adhesive composition to the surface of the inner cavity of the pneumatic tyre via the nozzle during the rotation, thereby providing a coating of the adhesive composition on the surface on the inner cavity of the pneumatic tyre;
(e) retracting the adhesive applicator and preferably stopping the rotation of the pneumatic tyre;
(f) positioning a surface of the component opposite the coating of the adhesive composition;
(g) applying the component to the coating of the adhesive composition, preferably while the pneumatic tyre is rotating using the tyre rotation rollers, thereby adhering the component to the surface of the inner cavity of the pneumatic tyre.

Viewed from a fourth aspect, the present invention is directed to a pneumatic tyre comprising a coating of the adhesive composition as defined hereinabove on a surface of an inner cavity of a pneumatic tyre.

Further advantageous features of the present invention can be found in the following description and the dependent claims.

### BRIEF DESCRIPTION OF THE FIGURES

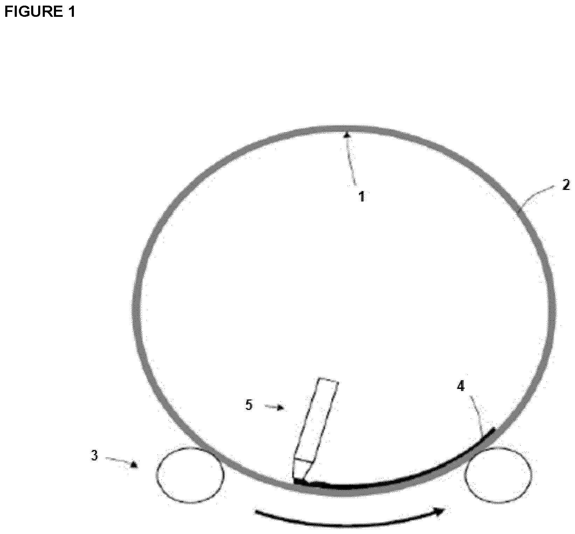

Figure 1 shows the application of the adhesive composition of the present invention to a surface of the inner cavity (1) of the pneumatic tyre (2) via a nozzle (5) during the rotation by the tyre rotation rollers (3), thereby providing a coating (4) of the adhesive composition on the surface on the inner cavity (1) of the pneumatic tyre (2).

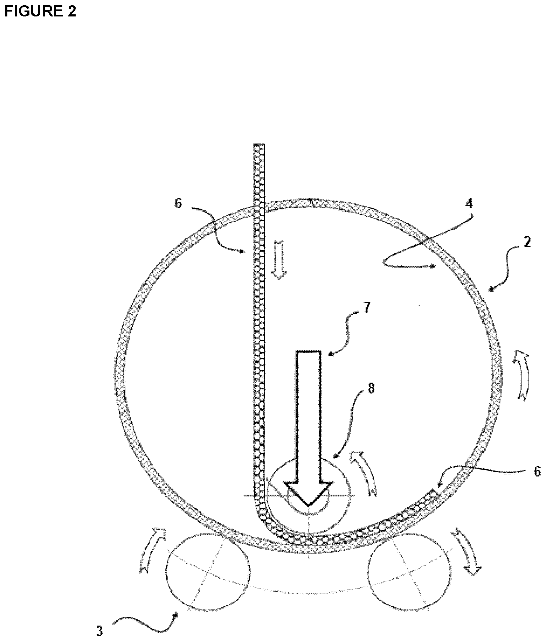

Figure 2 shows the application of the component (sound-absorbing material) (6) to the coating of the adhesive composition by means of a roller (8) which presses (7) the component (6) against the surface (4) of the inner cavity of the pneumatic tyre (2) that has been coated with the adhesive composition while the pneumatic tyre is rotating using the tyre rotation rollers (3), thereby adhering the component (6) to the surface (4) of the inner cavity of the pneumatic tyre (2).

### DETAILED DESCRIPTION OF THE INVENTION

The present inventors have discovered an adhesive composition for a surface of a pneumatic tyre having improved performance, including a broader application temperature range, better moisture resistance, a reduced cure time, no requirement for the surface of the component and the tyre to match perfectly or for them to be specially prepared prior to application, a broader service temperature range and a longer shelf-life.

According to the above, the present invention is directed to an adhesive composition for a surface of a pneumatic tyre, comprising:
an elastomer selected from the group consisting of an isobutylene isoprene rubber (IIR), a chlorinated isobutylene isoprene rubber (CIIR), a brominated isobutylene isoprene rubber (BIIR), an ethylene-propylene rubber (EPR), a styrene-butadiene rubber (SBR), a natural rubber, and combinations thereof, wherein the elastomer is present in an amount of 10% to 30% by weight of the adhesive composition;
a plasticizer, in an amount of from 30% to 90% by weight of the adhesive composition;
optionally a filler selected from the group consisting of carbon black, graphite, graphene, carbon nanotubes, silica, aluminosilicates, starch, magnesium oxide, calcium carbonate, titanium dioxide and combinations thereof;
a tackifier in an amount of from 1 % to 30% by weight of the adhesive composition; and,
a vulcanising agent in an amount of from 0.1% to 3% by weight of the adhesive composition.

It is preferred that the elastomer is a butyl rubber. Butyl rubber is a term of the art for synthetic rubbers comprising butyl monomers, such as copolymers of isobutylene with isoprene (IIR) and polyisobutylene rubber (PIB). The inner liner of pneumatic tyres often comprises a butyl rubber due to its low gas permeability, which prevents air leaks. It is thought that using a butyl rubber as the elastomer of the adhesive composition of the present invention may improve the compatibility between the adhesive and the inner liner, giving rise to the advantages mentioned herein. Thus, the elastomer of the present invention is preferably one or more selected from the group consisting of an isobutylene isoprene rubber (IIR), a chlorinated isobutylene isoprene rubber (ClIR), and a brominated isobutylene isoprene rubber (BIIR). Commercial butyl rubbers include Arlanxeos's X-Butyl^{®} range and Exxon's butyl rubber products.

The adhesive composition is preferably for adhering a component, preferably a sound absorbing material, to a surface of a pneumatic tyre, preferably a surface of an inner cavity of a pneumatic tyre.

The elastomer is present in an amount of 10% to 30% by weight of the adhesive composition, preferably from 10% to 30% by weight, more preferably from 22% to 27% by weight of the adhesive composition, for example 22, 23, 24, 25, 26, or 27% by weight of the adhesive composition. In a particular embodiment, the elastomer is present in an amount of 25% by weight of the adhesive composition.

The plasticizer is preferably one or more selected from the group consisting of aromatic mineral oils, naphthenic mineral oils, paraffinic mineral oils, a liquid butadiene rubber, and a liquid styrene butadiene rubber. Most preferably, the plasticizer is a liquid butadiene rubber, such as those marketed by Total Energies under the Ricon^{®} brand.

The plasticizer is present in an amount of from 30% to 90% by weight of the adhesive composition, preferably from 50 to 80% by weight, for example, 50, 55, 60, 65, 70, 75, or 80% by weight of the adhesive composition. In a particular embodiment, the plasticizer is present in an amount of 65% by weight of the adhesive composition.

The tackifier is preferably one or more selected from the group consisting of a phenolic resin, a rosinic resin, a terpenic resin, a petroleum resin, a coal tar, and an alkyl phenolic resin.

Phenolic resins and alkyl phenolic resin include highly cross-linked aromatic structures obtained by the polymerization of phenol (or a substituted phenol) with formaldehyde. The phenolic resin may be a novolak or resole resin. Novolaks (or novolacs) are phenolformaldehyde resins with a formaldehyde to phenol molar ratio of less than one. In place of phenol itself, they are often produced from cresols (methylphenols). Resole resins are typically made with a formaldehyde to phenol ratio of greater than one (usually around 1.5).

Terpenic resins include resins that are a mixture of terpene monomers (referred to herein as a heteropolymer), or a terpene homopolymer, wherein the terpene homopolymer may be an α-pinene homopolymer. They may be, for example an oligoterpene resin (i.e., a resin prepared from a terpene as the sole monomer), a terpene hydrocarbon resin (i.e., a resin prepared from a terpene and non-terpene hydrocarbon monomer(s)), and/or a terpene phenolic resin (i.e., a resin prepared from a terpene and phenolic compound). The basic molecular formula of terpenes are multiples of (C₅H₈)ₙ where n is the number of linked isoprene units and is greater than 1. Examples of terpenes suitable for use in the terpenic resin include, without limitation, isoprene, limonene, terpene, α-pinene, β-pinene, δ-3 carene, β-phellandrene and pyrolysates of α-pinene, β-pinene, δ-3 carene, δ-2 carene, turpentine, and combinations thereof.

Rosinic resins include resins that are mixtures of isomer organic acids (e.g. resin acid or rosin acids), characterised by a common structure comprising three C₆ fused rings, double bonds and a single carboxylic group. Rosin is a solid resinous material that occurs naturally in pine trees. There are three major sources of rosin, (1) gum rosin from the oleoresin extrudate of the living pine tree, (2) wood rosin from the oleoresin contained in the aged stumps; and (3) tall oil rosin from the waste carboxyl group to the liquor recovered as a by-product in the Kraft paper industry. The primary component of rosin is typically abietic acid. Rosinic resins include rosin ester resins, which may be an ester of rosin and a polyhydric alcohol. The polyhydric alcohol can be selected from the group consisting of ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, and mixtures thereof.

Petroleum resins are essentially based on carbon and hydrogen but may comprise other types of atoms. They can be aliphatic, cycloaliphatic, aromatic, hydrogenated aromatic, and aliphatic/aromatic, i.e. based on aliphatic and/or aromatic monomers. Petroleum resins can also be qualified as thermoplastic resins in the sense that they soften on heating and can thus be moulded.

Examples of petroleum resins include those selected from the group consisting of cyclopentadiene homopolymer or copolymer resins (abbreviated as CPD), dicyclopentadiene homopolymer or copolymer resins (abbreviated as DCPD), C₅ homopolymer or copolymer resins which may be partially or fully hydrogenated, C₉ homopolymer or copolymer resins which may be partially or fully hydrogenated, alphamethyl-styrene homopolymer or copolymer resins and combinations thereof.

Most preferably, the tackifier is a phenolic resin, such as those from Durez^{®} or Kraton Sylvares^{™}.

The tackifier is present in an amount of from 1% to 30% by weight of the adhesive composition, preferably from 5% to 15% by weight of the adhesive composition, for example 5, 6, 7, 8, 9, 10, 11, 12, 13, 14, or 15% by weight of the adhesive composition. In a particular embodiment, the plasticizer is present in an amount of 10% or 9.8% by weight of the adhesive composition.

The vulcanising agent of the present invention is not particularly limited and can be any of those known to the skilled person. In the present application, the terms vulcanising and curing may be used interchangeably. The vulcanising agent is preferably one or more selected from the group consisting of a sulphur-based vulcanising agent, such as sulphur, a peroxide-based vulcanising agent, such as dicumyl peroxide, a resin-based vulcanising agent, such as a phenolic resin, a metal oxide vulcanising agent, such as zinc oxide and/or magnesium oxide, and a quinone-based vulcanising agent, such as quinonedioxime. Preferably the vulcanising agent is a sulphur-based vulcanising agent such as sulphur. Suitable sulphur-based vulcanising agents are marketed under the Crystex^{™} brand.

The vulcanising agent is present in an amount of from 0.1% to 30%, preferably from 0.15% to 0.25% by weight of the adhesive composition, for example 0.15, 0.2, or 0.25% by weight of the adhesive composition. In a particular embodiment, the vulcanising agent is present in an amount of 0.2% by weight of the adhesive composition.

The adhesive composition may further comprise a filler. The filler may be a reinforcing filler or a non-reinforcing filler. The filler may be selected from the group consisting of carbon black, graphite, graphene, carbon nanotubes, silica, aluminosilicates, starch, magnesium oxide, calcium carbonate, titanium dioxide and combinations thereof.

The present inventors have discovered that the viscosity of the adhesive composition may be useful for providing its advantages. The viscosity of the adhesive composition is preferably from 50 to 1,000 N.s/m² (50 to 1,000 Pa.s) at a temperature of 100°C, for example, 50, 100, 150, 200, 250, 300, 350, 400, 450, 500, 550, 600, 650, 700, 750, 800, 850, 900, 950, or 1,000 N.s/m² (or Pa.s) at a temperature of 100°C. The viscosity of the adhesive composition may be achieved by at least partially curing the adhesive composition. The viscosity of the adhesive compositions is measured according to ASTM D5099.

### Preferred embodiments of the adhesive composition

In a preferred embodiment, the adhesive composition comprises:
an elastomer selected from the group consisting of an isobutylene isoprene rubber (IIR), a chlorinated isobutylene isoprene rubber (CIIR), a brominated isobutylene isoprene rubber (BIIR), and combinations thereof, wherein the elastomer is present in an amount of 15% to 30% by weight of the adhesive composition;
liquid butadiene rubber, in an amount of from 50% to 80% by weight of the adhesive composition;
a phenolic resin in an amount of from 5% to 15% by weight of the adhesive composition; and,
a sulphur-based vulcanizing agent in an amount of from 0.15% to 0.25% by weight of the adhesive composition;
preferably wherein the adhesive composition has a viscosity of from 50 to 1,000 N.s/m² (50 to 1,000 Pa.s) at a temperature of 100°C, optionally wherein the adhesive is at least partially cured, preferably wherein the adhesive is at least partially cured to a viscosity of from 50 to 1,000 N.s/m² (50 to 1,000 Pa.s) at a temperature of 100°C.

In a preferred embodiment, the adhesive composition comprises:
an elastomer selected from the group consisting of an isobutylene isoprene rubber (IIR), a chlorinated isobutylene isoprene rubber (CIIR), a brominated isobutylene isoprene rubber (BIIR), and combinations thereof, wherein the elastomer is present in an amount of 25% by weight of the adhesive composition;
liquid butadiene, present in an amount of 65% by weight of the adhesive composition;
a phenolic resin present in an amount of 9.8% or 10% by weight of the adhesive composition; and,
a sulphur-based vulcanizing agent present in an amount of 0.2% by weight of the adhesive composition;
preferably wherein the adhesive composition has a viscosity of from 50 to 1,000 N.s/m² (50 to 1,000 Pa.s) at a temperature of 100°C, optionally wherein the adhesive is at least partially cured, preferably wherein the adhesive is at least partially cured to a viscosity of from 50 to 1,000 N.s/m² (50 to 1,000 Pa.s) at a temperature of 100°C.

### Process for preparing the adhesive composition

The present invention is directed to a process for preparing the adhesive composition may comprise mixing the components (i.e. the elastomer, optional filler, plasticizer, tackifier, and vulcanizing agent as defined hereinabove) by the methods known to the skilled person and at least partially curing the composition, preferably to a viscosity of from 50 to 1,000 N.s/m² (50 to 1,000 Pa.s) at a temperature of 100°C.

In a particular embodiment, the process for preparing an adhesive composition described hereinabove may comprise:
(a) adding the elastomer to a mixer, preferably a double arm kneader comprising a Banbury type blade, and mixing at a temperature below 140°C;
(b) optionally adding the filler to the mixer and mixing until homogenous;
(c) adding one of the plasticizer and the tackifier to the mixer and mixing at a temperature below 130°C until homogenous;
(d) adding the other of the plasticizer and the tackifier to the mixer and mixing at a temperature below 130°C until homogenous;
(e) adding the vulcanising agent to the mixer and mixing;
(f) adjusting the temperature of the composition to 120°C and curing the adhesive composition for from 10 to 60 mins, preferably for from 20 to 40 mins, optionally curing the adhesive composition to a viscosity of from 50 to 1,000 N.s/m² (50 to 1,000 Pa.s) at a temperature of 100°C.

If the mixer is a double arm kneader comprising a Banbury type blade, the double arm kneader may consist of two heavy blades on parallel horizontal shafts. The blades are mounted so that their paths are either tangential or intermeshing. The speed of the kneader may be operated at the minimum speed admitted by the machine to prevent the material degradation and the rubber temperature does not exceed 140°C.

Curing is performed for from 10 to 60 mins, preferably for from 20 to 40 mins, for example 20, 25, 30, 35, or 40 minutes. Additionally or alternatively, the curing may be performed until the adhesive composition has a viscosity of from 50 to 1,000 N.s/m² (50 to 1,000 Pa.s) at a temperature of 100°C.

The method may further comprise a step of quenching the curing, which may comprise reducing the temperature of the adhesive composition to room temperature (e.g. 20 to 30°C).

The present invention is also directed to the adhesive composition produced by the processes defined hereinabove.

### Use of the adhesive composition

The present inventors have discovered that the adhesive composition is particularly advantageous when it is used on a surface of a pneumatic tyre, preferably a surface of an inner cavity of a pneumatic tyre, to adhere a component to the surface. In particular, the adhesive composition is advantageous when used to adhere a sound-absorbing material to the surface of the pneumatic tyre.

According to the above the present invention is directed to the use of the adhesive composition defined hereinabove on a surface of a pneumatic tyre, preferably a surface of an inner cavity of a pneumatic tyre.

Preferably the use comprises bonding or adhering a component, preferably a sound-absorbing material, to a surface of an inner cavity of a pneumatic tyre. The surface is preferably a surface of an inner liner and / or a sidewall of the pneumatic tyre.

The sound-absorbing material is not particularly limited and may be any of those known to the skilled person. For example, the sound-absorbing material may be expanded polyurethane, polystyrene, expanded melamine, or ethylene-propylene diene monomer (EPDM). The sound-absorbing material may be coated with the adhesive composition before the sound-absorbing material is adhered to the surface, or the surface may be coated with the adhesive composition before the sound-absorbing material is adhered to the surface. Alternatively, the surface and the sound-absorbing material may be coated with the adhesive composition before the sound-absorbing material is adhered to the surface.

According to the above, the present invention is also directed to a method for adhering a component, preferably a sound-absorbing material, to a surface of an inner cavity of a pneumatic tyre comprising:
(a) mounting a pneumatic tyre on a device for rotating a pneumatic tyre comprising tyre rotation rollers;
(b) positioning an adhesive applicator, comprising a hopper containing the adhesive composition defined hereinabove and a nozzle in fluid communication with the hopper, above a surface of an inner cavity of the pneumatic tyre;
(c) rotating the pneumatic tyre using the tyre rotation rollers;
(d) applying the adhesive composition to the surface of the inner cavity of the pneumatic tyre via the nozzle during the rotation, thereby providing a coating of the adhesive composition on the surface on the inner cavity of the pneumatic tyre;
(e) retracting the adhesive applicator and preferably stopping the rotation of the pneumatic tyre;
(f) positioning a surface of the component, preferably the sound-absorbing material, opposite the coating of the adhesive composition;
(g) applying the component to the coating of the adhesive composition, preferably while the pneumatic tyre is rotating using the tyre rotation rollers, thereby adhering the component to the surface of the inner cavity of the pneumatic tyre.

Preferably a temperature of the adhesive during the step of applying is from 80 to 130°C, preferably from 100 to 130°C, for example 100, 105, 110, 115, 120, 125, or 130°C.

The time from the end of the step of applying the adhesive to the start of the step of applying the component is not particularly limited because the adhesive composition of the present invention has excellent moisture resistance and does not cure on exposure to air. Nevertheless, the time from the end of the step of applying the adhesive to the start of the step of applying the component is preferably less than or equal to 120 seconds, more preferably less than or equal to 60 seconds, for example 5, 10, 15, 20, 25, 30, 35, 40, 45, 50, 55, or 60 seconds.

The adhesive composition may be applied continuously or discontinuously to the surface during the step of applying. Preferably the adhesive composition is applied continuously to the surface.

In an alternative embodiment, which is equally preferred to that above, a method is provided for adhering a component, preferably a sound-absorbing material, to a surface of an inner cavity of a pneumatic tyre comprising:
(a) mounting a pneumatic tyre on a device for rotating a pneumatic tyre comprising tyre rotation rollers;
(b) positioning the component, wherein the component is coated with the adhesive composition as defined hereinabove and the component is positioned such that the coating of the adhesive composition is facing the surface of the inner cavity of the pneumatic tyre;
(c) applying the component to the surface of the inner cavity of the pneumatic tyre, preferably while the pneumatic tyre is rotating using the tyre rotation rollers, thereby adhering the component to the surface of the inner cavity of the pneumatic tyre.

Preferably, the coating of the adhesive composition comprises at least two parallel strips along the circumferential length of the inner cavity of the pneumatic tyre, preferably wherein each parallel strip is continuous. A distance between the central longitudinal axes of two adjacent parallel strips may be from 70 to 250 mm, preferably from 120 to 160 mm, for example 120, 125, 130, 135, 140, 145, 150, 155, or 160 mm. The coating may comprise at least one further strip forming a continuous spiral along the circumferential length of the tyre between at least two of the strips, preferably wherein the spiral completes one rotation between the strips.

It is preferred that the strips have a width of from 1 mm to 50 mm, preferably from 1 mm to 30 mm, for example 1, 5, 10, 15, 20, 25, or 30 mm.

It is preferred that the strips have a thickness or depth (that is, the dimension perpendicular to the plane of the surface of the inner cavity of the pneumatic tyre) of from 0.5 mm to 2 mm, preferably from 0.5 mm to 1 mm, for example 0.5, 0.6, 0.7, 0.8, 0.9, or 1 mm. The thickness of each strip may be uniform (i.e. a single value within the thickness ranges), or the thickness of each strip may be non-uniform.

The component may be applied by means of a roller which presses the component against the surface of the inner cavity of the pneumatic tyre. The roller applies pressure to the component to promote adhesion. If the force applied is too low, the adhesive may not bond with the component properly. If the force applied is too high, the component or tyre may deform, modifying the bonding shape and causing a loss of adhesion over time. The present inventors have found it preferable for the roller to press the component with a force of from 2 to 10 kg/cm², preferably from 3 to 7 kg/cm², for example 3, 4, 5, 6, or 7 kg/cm². In a preferred embodiment, the force is about 5 kg/cm².

Suitable devices for performing the above methods are described in WO2021219848A1.

### Pneumatic tyres comprising a coating of the adhesive composition

In a further aspect, the present invention is directed to pneumatic tyres comprising a coating of the adhesive composition. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, or a high performance tyre.

The part of the tyre in which the rubber composition of the present invention is used is not specifically limited and may be appropriately selected depending on the intended purpose. Preferably the coating is on a surface of an inner cavity of a pneumatic tyre, for example an inner liner and / or a sidewall.

In view of the above the present invention is directed to a pneumatic tyre comprising a coating of the adhesive composition as defined hereinabove, preferably on a surface of an inner cavity of a pneumatic tyre.

The coating may have the form and properties defined with respect to the method for adhering a component. For example, the coating may have at least two parallel strips along the circumferential length of the inner cavity of the pneumatic tyre, preferably wherein each strip is continuous. The coating may comprise at least one further strip forming a continuous spiral along the circumferential length of the tyre between at least two of the strips, preferably wherein the spiral completes one rotation between the strips.

The coating may have a thickness of from 0.5 mm to 2 mm, preferably from 0.5 mm to 1 mm, for example 0.5, 0.6, 0.7, 0.8, 0.9, or 1 mm. The thickness of each strip may be uniform (i.e. a single value within the thickness ranges), or the thickness of each strip may be non-uniform.

The pneumatic tyre may further comprise a component, preferably a sound-absorbing material, adhered to the surface of the inner cavity of the pneumatic tyre by means of the adhesive.

In addition to the above, the present invention is directed to a sound-absorbing material for a surface of an inner cavity of a pneumatic tyre comprising a coating of the adhesive composition defined hereinabove.

### EXAMPLES

### Methods of measurement

Measurement methods can be found in Handbook of adhesives and Sealants, The McGraw-Hill Companies, Inc. Edward M. Petrie and Adhesives Technology Handbook, William Andrew Norwich NY USA, Sina Ebnesajjad.

### Application temperature

The adhesive is applied to a tyre in a range of temperatures from 0 to 120°C and how easily the material detaches from the surface is inspected. For commercial products, the data are reported in technical datasheets.

### Moisture resistance

ASTM D1151-00: Standard Practice for Effect of Moisture and Temperature on Adhesive Bonds.

### Cure time

The time needed for no detachment of the adhesive from the surfaces of the sponge and tyre is monitored.

### Substrate morphology

Applying the adhesive to substrates with different morphologies and checking qualitatively the level of detachment (visual inspection and monitoring at different times). For commercial products, the data are reported in technical datasheets.

### Service Temperature

The adhesive data obtained from evaluation of material properties based on raw materials composition properties as well as on evaluation of adhesive behaviour in the range of temperatures reported in Table 2. For commercial products, the data are reported in technical datasheets.

### Shelf-life

The above material properties were tested periodically over 12 months to confirm if they are in line with properties of a fresh sample of the adhesive. For commercial products, the data are reported in technical datasheets.

### Viscosity

The viscosity of the adhesive compositions is measured according to ASTM D5099.

### Example 1

An example butyl rubber adhesive of the present invention is shown in Table 1 below.

**Table 1**

| **Component** | | **Amount by weight of the composition (%)** |
|---|---|---|
| Elastomer | Butyl-based rubber (1) | 25 % |
| Plasticizer | Liquid butadiene (2) | 65 % |
| Tackifier | Phenol-based resin (3) | 9.8% |
| Vulcanising agent | Sulfur-based vulcanizing agent (4) | 0.2% |

| | | |
|---|---|---|
| (1) Arlanxeo X-Butyl ^{®}, Exxon^{™} Butyl (2) Ricon ^{®} (3) Durez ^{®}, Sylvares^{™} (4) Crystex^{™} | | |

### General method for preparing the butyl rubber adhesive

The butyl-based rubber is added to a double arm kneader featuring a Banbury type blade. The double arm kneader consists of two heavy blades on parallel horizontal shafts. The blades are mounted so that their paths are either tangential or intermeshing. The speed of the kneader is operated at the minimum speed admitted by the machine to prevent the material degradation and the rubber temperature does not exceed 140°C.

If a filler is to be added, the filler may be added slowly once the butyl-based rubber is plasticized to provide full incorporation and dispersion of the filler in the polymer matrix.

After this step, the liquid and / or low molecular weight components are added, i.e. the plasticizer and tackifier. The addition of these components is carried out by adding the component slowly to ensure the dispersion and incorporation into the polymer matrix. The components are added sequentially wherein, once the mixture of the first component has reached a homogeneous consistency, the next component is added. During this step, the temperature should not exceed 130°C. The curing / vulcanising agent is either added during this step or after the liquid and / or low molecular weight components are mixed to a homogeneous consistency. A sulfur-based curing agent is added and the composition is cured for from 20 to 40 minutes at 120°C.

Table 2 below compares the adhesive characteristics of the adhesive of the present invention with a commercial cyanoacrylate adhesive and a commercial pressure-sensitive adhesive.

**Table 2**

| | **Cyanoacrylate (1)** | **Pressure Sensitive adhesive (PSA) (2)** | **Adhesive of Example 1** |
|---|---|---|---|
| Temperature of application (°C) | 15-45 | 15-40 | 0 - 120 |
| Moisture resistance | Poor | Good | Excellent |
| Cure time (sec) | 15-60 | Few seconds | Not required |
| Substrates morphology | Glued parts must fit together perfectly | Glued parts must fit together perfectly | Perfect fit is not required |
| Substrates surface preparation | Clean accurately before application | Clean before application | No special clean required Remove only release layer if present |
| Service temperature (°C) | -55 to 79 | -73 to 121 | -100 to 160 |
| Shelf-life | 6 months | 6 months | More than 12 months |

| | | | |
|---|---|---|---|
| (1) For example, 3M^{™} Scotch-Weld^{™} PR1500, Loctite ^{®} 401^{™}, Permabond ^{®} 102. (2) For example, 3M^{™} VHB^{™} Tape 4655F, tesa^{®}ACX^{plus} 7063, tesa^{®} 66013 Ultra Low VOC. | | | |

As shown by Table 2, the adhesive of the present invention has improved performance in all areas, including a broader application temperature range, better moisture resistance, a reduced cure time, no requirement for the surfaces to fit perfectly or for them to be specially prepared prior to application, a broader service temperature range and a longer shelf-life. The adhesive of the present invention is therefore improved compared to adhesives use to adhere components to surfaces of the inner cavity of a pneumatic tyre.

## Claims

1. An adhesive composition for a surface of a pneumatic tyre, comprising:
an elastomer selected from the group consisting of an isobutylene isoprene rubber (IIR), a chlorinated isobutylene isoprene rubber (CIIR), a brominated isobutylene isoprene rubber (BIIR), an ethylene-propylene rubber (EPR), a styrene-butadiene rubber (SBR), a natural rubber, and combinations thereof, wherein the elastomer is present in an amount of 10% to 30% by weight of the adhesive composition;
a plasticizer, in an amount of from 30% to 90% by weight of the adhesive composition;
optionally a filler selected from the group consisting of carbon black, graphite, graphene, carbon nanotubes, silica, aluminosilicates, starch, magnesium oxide, calcium carbonate, titanium dioxide and combinations thereof;
a tackifier in an amount of from 1% to 30% by weight of the adhesive composition; and,
a vulcanising agent in an amount of from 0.1% to 3% by weight of the adhesive composition.

2. The adhesive composition according to claim 1, wherein the elastomer is one or more selected from the group consisting of an isobutylene isoprene rubber (IIR), a chlorinated isobutylene isoprene rubber (CIIR), and a brominated isobutylene isoprene rubber (BIIR).

3. The adhesive composition according to claim 1 or claim 2, wherein the plasticizer is one or more selected from the group consisting of aromatic mineral oils, naphthenic mineral oils, paraffinic mineral oils, a liquid butadiene rubber, and a liquid styrene butadiene rubber, preferably wherein the plasticizer is a liquid butadiene rubber.

4. The adhesive composition according to any one of the preceding claims, wherein the tackifier is one or more selected from the group consisting of a phenolic resin, a rosinic resin, a terpenic resin, a petroleum resin, a coal tar, and an alkyl phenolic resin, preferably wherein the tackifier is a phenolic resin.

5. The adhesive composition according to any one of the preceding claims, wherein the vulcanising agent is one or more selected from the group consisting of a sulphur-based vulcanising agent, a peroxide-based vulcanising agent, a resin-based vulcanising agent, a metal oxide vulcanizing agent and a quinone-based vulcanising agent, preferably wherein the vulcanizing agent is a sulphur-based vulcanising agent.

6. The adhesive composition according to any one of the preceding claims, wherein:
the plasticizer is present in an amount of from 50% to 80% by weight of the adhesive composition; and/or,
the tackifier is present in an amount of from 5% to 15% by weight of the adhesive composition; and/or,
the vulcanizing agent is present in an amount of from 0.15% to 0.25% by weight of the adhesive composition.

7. The adhesive composition according to any one of the preceding claims, wherein the adhesive composition is at least partially cured.

8. The adhesive composition according to any one of the preceding claims, wherein the adhesive composition has a viscosity of from 50 to 1,000 N.s/m² (50 to 1,000 Pa.s) at a temperature of 100°C.

9. The adhesive composition according to any one of the preceding claims, wherein the adhesive composition comprises:
an elastomer which is one or more selected from the group consisting of an isobutylene isoprene rubber (IIR), a chlorinated isobutylene isoprene rubber (CIIR), and a brominated isobutylene isoprene rubber (BIIR), wherein the elastomer is present in an amount of 15% to 30 % by weight of the adhesive composition;
liquid butadiene rubber, in an amount of from 50% to 80% by weight of the adhesive composition;
a phenolic resin in an amount of from 5% to 15% by weight of the adhesive composition; and,
a sulphur-based vulcanizing agent, preferably sulphur, in an amount of from 0.15% to 0.25% by weight of the adhesive composition;
preferably wherein the adhesive composition has a viscosity of from 50 to 1,000 N.s/m² (50 to 1,000 Pa.s) at a temperature of 100°C, optionally wherein the adhesive is at least partially cured, preferably wherein the adhesive is at least partially cured to a viscosity of from 50 to 1,000 N.s/m² (50 to 1,000 Pa.s) at a temperature of 100°C.

10. Use of the adhesive composition according to any one of claims 1 to 9 on a surface of a pneumatic tyre, preferably a surface of an inner cavity of a pneumatic tyre.

11. The use according to claim 10, comprising adhering a component, preferably a sound-absorbing material, to a surface of an inner cavity of a pneumatic tyre.

12. A method for adhering a component, preferably a sound-absorbing material, to a surface of an inner cavity of a pneumatic tyre comprising:
(a) mounting a pneumatic tyre on a device for rotating a pneumatic tyre comprising tyre rotation rollers;
(b) positioning an adhesive applicator, comprising a hopper containing the adhesive composition according to any one of claims 1 to 9 and a nozzle in fluid communication with the hopper, above a surface of an inner cavity of the pneumatic tyre;
(c) rotating the pneumatic tyre using the tyre rotation rollers;
(d) applying the adhesive composition to the surface of the inner cavity of the pneumatic tyre via the nozzle during the rotation, thereby providing a coating of the adhesive composition on the surface on the inner cavity of the pneumatic tyre;
(e) retracting the adhesive applicator and preferably stopping the rotation of the pneumatic tyre;
(f) positioning a surface of the component opposite the coating of the adhesive composition;
(g) applying the component to the coating of the adhesive composition, preferably while the pneumatic tyre is rotating using the tyre rotation rollers, thereby adhering the component to the surface of the inner cavity of the pneumatic tyre.

13. The method according to claim 12, wherein the component is applied by means of a roller which presses the component against the surface of the inner cavity of the pneumatic tyre, preferably wherein the roller presses the component with a force of from 2 to 10 kg/cm², preferably from 3 to 7 kg/cm², for example about 5 kg/cm².

14. A pneumatic tyre comprising a coating of the adhesive composition of any one of claims 1 to 9 on a surface of an inner cavity of a pneumatic tyre.

15. The pneumatic tyre according to claim 14, wherein the tyre further comprises a component, preferably a sound absorbing material, adhered to the surface of the inner cavity of the pneumatic tyre by means of the adhesive composition.
